# EUROPEAN PATENT SPECIFICATION

(11) **EP 4 269 207 B1**
(45) Date of publication and mention of the grant of the patent: **08.04.2026**
(21) Application number: 21944876.8
(22) Date of filing: 02.12.2021
(51) Int. Cl.: B61D 17/02, B61D 17/04

(54) **FIXED COVER, FRONT COVER, AND RAIL VEHICLE**
FESTSTEHENDE ABDECKUNG, VORDERABDECKUNG UND SCHIENENFAHRZEUG
CAPOT FIXE, CAPOT AVANT ET VÉHICULE FERROVIAIRE

(30) Priority: 11.06.2021 CN 202110655848
(43) Date of publication of application: 01.11.2023
(73) Proprietor: CRRC Qingdao Sifang Co., Ltd., Qingdao, Shandong 266111 (CN)
(72) Inventor: LIU, Zhenshuai, Qingdao, Shandong 266111 (CN); ZHANG, Xiaobo, Qingdao, Shandong 266111 (CN); TU, Qinshu, Qingdao, Shandong 266111 (CN); DU, Jian, Qingdao, Shandong 266111 (CN); TIAN, Honglei, Qingdao, Shandong 266111 (CN)
(74) Representative: Micheli & Cie SA
(86) International application number: PCT/CN2021/135117
(87) International publication number: WO 2022/257380

(56) References cited:
- EP-A1- 3 556 633
- CN-A- 103 625 483
- CN-A- 105 799 811
- CN-A- 109 070 908
- CN-A- 112 298 227
- CN-A- 113 306 581
- CN-B- 110 027 577
- CN-U- 203 592 984
- CN-U- 207 416 843

## Description

### TECHNICAL FIELD

The present application relates to railway vehicle technologies, and in particular, to a fixed hood, a front hood and a railway vehicle.

### BACKGROUND

A front hood, as one of important components of a high-speed rail vehicle, has the following main functions: in case that the front hood is opened, operations such as coupler reconnection, emergency rescue and equipment maintenance can be performed on the rail vehicle; in case that the front hood is closed, the rail vehicle may have a streamlined shape during operation at a high speed, which decreases running resistance and improves safety and stability. The front hood generally is consisted of two parts: a fixed hood being stationary relative to the vehicle and an opening and closing hood moving relative to the vehicle.

During high-speed operation, a rail train is easily subjected to impacts from foreign objects such as gravel, stones and birds. The front hood is impacted and damaged severely because of locating at the front end of the train. In case that the opening and closing hood cannot be used due to severe damage, functions of the front hood can be quickly restored by replacing it with a new front hood. The fixed hood is connected to the vehicle body through fasteners, which has a huge overall volume. When the front hood is replaced, much external equipment such as couplers, obstacle removers, and opening or closing mechanisms need to be removed. After the front hood is replaced, the external equipment needs to be restored one by one and the entire vehicle is painted and repaired together with the front, which makes overall replacement process being time-consuming and complicated. Therefore, a mounting structure of a traditional fixed hood cannot meet the requirements of a high-speed train.

4. CN112298227A discloses a modular cab structure and a railway vehicle. The cab structure comprises a first cover body module, a second cover body module and apron board modules which are sequentially connected to form a cab; the second cover body module is arranged at the bottom of the first cover body module; the two apron board modules are symmetrically arranged at the bottom of the second cover body module; the first cover body module comprises a main body framework, a front window framework and a side window framework; wherein the main body framework comprises a first camber beam, a second camber beam and longitudinal beams; the free ends of the first camber beam and the second camber beam are connected with each other and form an included angle; the two longitudinal beams are symmetrically arranged on the two sides of the cab and connected with the first bent beam and the second bent beam.

CN110027577A discloses a cab joined by aluminum honeycombs including a cab framework, and also including a front-end aluminum plate module arranged at the front end of the cab framework, a roof aluminum honeycomb module arranged on the top end of the cab framework and side wall aluminum honeycomb modules arranged on two sides of the cab framework, wherein the front-end aluminum plate module and the roof aluminum honeycomb module are integrally connected by a roof curved beam arranged on the top end of the cab framework; and two sides of the front-end aluminum plate module are separately and integrally connected to the side wall aluminum honeycomb modules on the corresponding sides by roof side beams arranged on the roof curved beam.

### SUMMARY

The present application provides a fixed hood, which can be quickly replaced under the premise of avoiding the removal of other external devices.

The invention is set out in appended set of claim.

One or more solutions in the embodiments of the present application mentioned above have at least one of the following effects.

The fixed hood according to the embodiment of the present application includes the mounting frame and the fixed hood main body, the mounting frame is provided to be detachably connected to a vehicle body front-end bearing structure; and the fixed hood main body is arranged outside the mounting frame and including a top hood body, a bottom hood body and two lateral hood bodies, where the top hood body, the bottom hood body and the two lateral hood bodies are detachably connected to the mounting frame, respectively, the two lateral hood bodies are symmetrically arranged between the top hood body and the bottom hood body, and the top hood body, to make the bottom hood body and the two lateral hood bodies are enclosed to form a front-end opening. Since the fixed hood main body is designed in a split structural arrangement, the fixed hood is not only easy to mount and adjust during the assembly of the fixed hood, but also quickly to be replaced when the fixed hood is damaged due to impact and cannot be repaired. In addition, damaged members in the fixed hood can be replaced separately without overall replacement, which not only shortens the replacement cycle of the fixed hood and decreases costs.

The front hood according to an embodiment of the present application includes the fixed hood according to the above embodiments. Since the front hood is provided with the fixed hood according to the above-mentioned embodiment, the front hood has all the advantages of the fixed hood according to the above-mentioned embodiment, thereby improving the performance of the hood.

A rail vehicle according to an embodiment of the present application includes the fixed hood according to the above embodiments or the front hood according to the above embodiments. Since the rail vehicle is provided with the fixed hood according to the above embodiment or the front hood according to the above embodiment, the rail vehicle has all the advantages of the fixed hood according to the above embodiment or the front hood according to the above embodiment, thereby improving the use of the rail vehicle performance.

Additional aspects and advantages of this application will be partially given in the following description, and some thereof will become obvious from the following description, or be understood through the practice of this application.

### BRIEF DESCRIPTION OF DRAWINGS

In order to clearly illustrate the solutions according to the present application or the related art, the accompanying drawings used in the description of the embodiments of the present application or the related art are briefly introduced below. It should be noted that the drawings in the following description are only part embodiments of the present application. For those of ordinary skill in the art, other drawings can be obtained according to these drawings without creative efforts.
FIG. 1 is a schematic structural diagram of a fixed hood according to the present application;
FIG. 2 is an assembly schematic diagram of a fixed hood after lateral hood bodies are removed according to the present application;
FIG. 3 is a schematic structural diagram of a mounting framework according to the present application;
FIG. 4 is a schematic structural diagram of a top hood body according to the present application;
FIG. 5 is a schematic structural diagram of two lateral hood bodies according to the present application; and
FIG. 6 is a schematic structural diagram of a bottom hood body according to the present application.

### Reference numerals:

1: mounting frame; 101: first support longitudinal bar; 102: second support longitudinal bar;
103: first connecting crossbar; 104: second connecting crossbar; 105: third connecting crossbar;
2: top hood body; 21: first pre-embedded boss; 201: top hood body flange;
202: first limiting plate; 203: vehicle body connecting flange; 204: connecting hole;
3: lateral hood body; 301: first lateral hood body flange;
302: second lateral hood body flange; 303: limiting bayonet; 4: bottom hood body;
41: second pre-embedded boss; 401: bottom hood body flange; 402: second limiting plate;
5: front-end opening;
6: vehicle body mounting seat; 601: first mounting portion; 602: vehicle body connecting portion;
7: first connecting plate; 701: connecting folded edge; 8: second connecting plate;
9: first connecting seat; 10: second connecting seat; 11: first floating nut;
12: second floating nut.

### DETAILED DESCRIPTION OF THE EMBODIMENTS

Embodiments of the present application are further described in detail below with reference to the drawings and embodiments. The following embodiments are intended to illustrate the application, but are not intended to limit the scope of the application.

In the description of the embodiments of the present application, it is to be noted that the orientation or positional relationships indicated by terms such as "center", "longitudinal", "lateral", "upper", "lower", "front", "rear", "left", "right", "vertical", "horizontal", "top", "bottom", "inside", "outside", etc. are based on the orientation or positional relationship shown in the drawings, and are merely for the convenience of describing the embodiments of the present application and simplifying the description, rather than indicating or implying that the device or component stated must have a particular orientation, is constructed and operated in a particular orientation, and thus is not to be construed as limiting the embodiments of the present application. Moreover, the terms "first", "second", "third", and the like are used for descriptive purposes only and are not to be construed as indicating or implying relative importance.

In the description of the embodiments of the present application, it is to be noted that unless explicitly stated and defined otherwise, the terms "connected with," and "connected" shall be understood broadly, for example, it may be either fixedly connected or detachably connected, or can be integrated; it may be mechanically connected, or electrically connected; it may be directly connected, or indirectly connected through an intermediate medium. The specific meanings of the terms above in embodiments of the present application can be understood by a person skilled in the art in accordance with specific conditions.

In the embodiments of this application, unless otherwise clearly stated and defined, the first feature being located "on" or "under" the second feature means that the first feature is in direct contact with the second feature or the first feature is in contact with the second feature by an intervening media. Also, the first feature being located "on", "above" and "on top of" the second feature may mean that the first feature is directly on or above the second feature, or it simply means that the level of the first feature is higher than the second feature. The first feature being located "under", "below" and "on bottom of" the second feature may mean that the first feature is directly under or below the second feature, or it simply means that the level of the first feature is lower than the second feature.

In the description of this specification, descriptions with reference to the terms "one embodiment", "some embodiments", "examples", "specific examples", or "some examples" etc. mean that specific features, structure, materials or characteristics described in conjunction with the embodiment or example are included in at least one embodiment or example of the embodiments of the present application. In this specification, the schematic expressions of the above terms do not necessarily refer to the same embodiment or example. Also, the described specific features, structures, materials or characteristics can be combined in any one or more embodiments or examples in a suitable manner. In addition, those skilled in the art may integrate and combine the different embodiments or examples and the features of the different embodiments or examples described in this specification without contradicting each other.

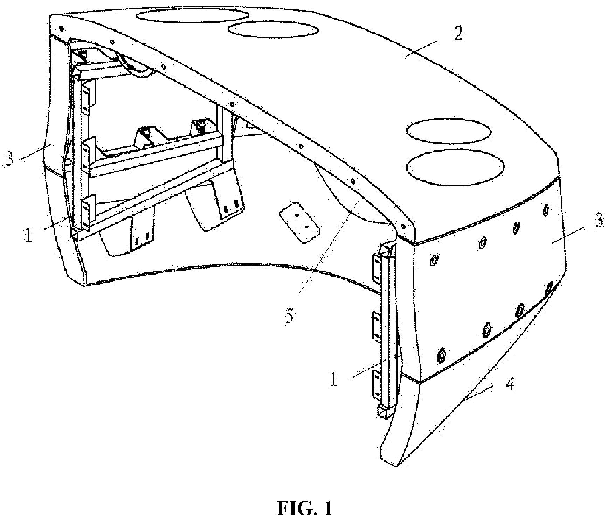

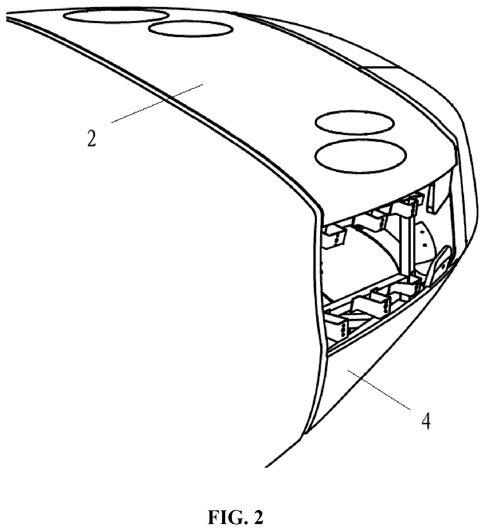

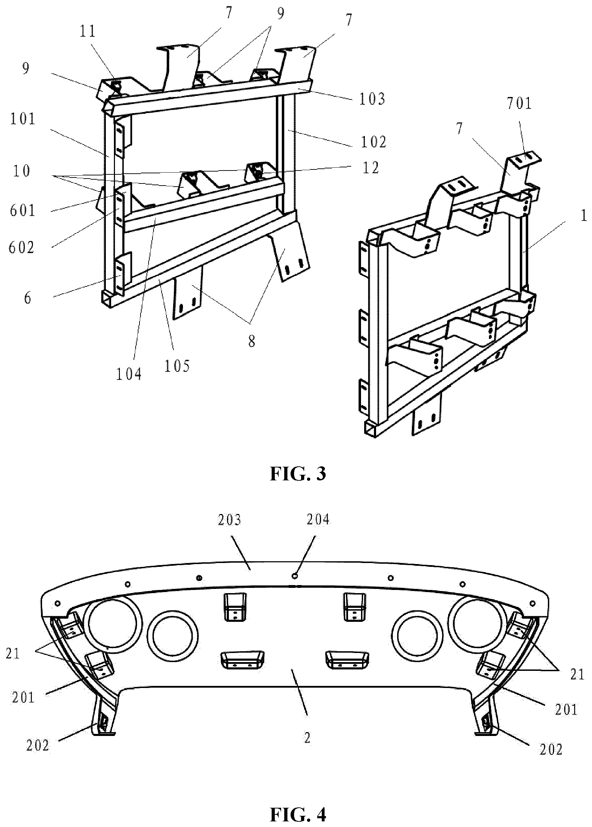

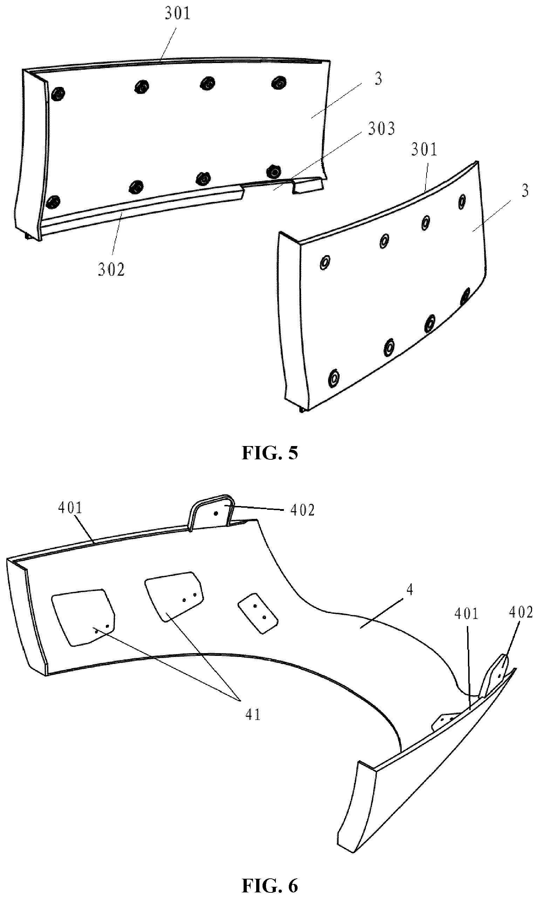

Specific embodiments of a fixed hood according to the present application are described below with reference to FIGS. 1 to 6.

The fixed hood according to the present application includes a mounting frame 1 and a fixed hood main body. The fixed hood main body is arranged outside the mounting frame and the mounting frame 1 is detachably connected to a vehicle body front-end bearing structure (not shown). As such, the fixed hood is assembled and fixed on the vehicle body.

The fixed hood main body includes a top hood body 2, a bottom hood body 4 and two lateral hood bodies 3 which are separately arranged; and the top hood body 2, the bottom hood body 4 and the two lateral hood bodies 3 are detachably connected with the mounting frame 1 respectively. The two lateral hood bodies 3 are symmetrically arranged between the top hood body 2 and the bottom hood body 4, and the top hood body 2, the two lateral hood bodies 3 and the bottom hood body 4 are enclosed to form a front-end opening 5. That is, since the fixed hood main body is designed in a split structural arrangement, the fixed hood body is divided into four independent parts. The top hood body 2 is used to install components such as headlights and wipers, the lateral hood bodies 3 are used for daily disassembly and internal maintenance, and the bottom hood body 4 is used for fixing pipelines, wire racks and connecting a bottom obstacle remover.

In the fixed hood according to the embodiment of the present application, since the fixed hood main body is designed in a modular structural arrangement, the fixed hood is not only easy to mount and adjust during the assembly of the fixed hood, but also quickly to be replaced without disassembling other external equipment when the fixed hood is damaged due to impact and cannot be repaired. In addition, damaged members in the fixed hood can be replaced separately without the need for overall replacement, which shortens the replacement cycle of the fixed hood, simplifies the process of replacing the fixed cover and decreases costs.

In an embodiment, the top hood body 2, the bottom hood body 4 and the two lateral hood bodies 3 are all molded, the same models and parts have good interchangeability, so that a damaged model or part can be replaced separately when the fixed hood is damaged. In this way, the assembled fixed hood has more precise overall profile.

In an embodiment of the present application, the mounting frame 1 includes a first frame and a second frame arranged symmetrically, and the first frame and the second frame both include a first support longitudinal bar 101, a second support longitudinal bar 102, a first connecting crossbar 103, a second connecting crossbar 104 and a third connecting crossbar 105. The first connecting crossbar 103, the second connecting crossbar 104 and the third connecting crossbar 105 are arranged along a height direction of the mounting frame 1 at intervals respectively, and both ends of the first connecting crossbar 103, both ends of the second connecting crossbar 104 and both ends of the third connecting crossbar 105 are connected with the first support longitudinal bar 101 and the second support longitudinal bar 102, respectively. That is, the connection between the first support longitudinal bar 101, the second support longitudinal bar 102, the first connecting crossbar 103, the second connecting crossbar 104 and the third connecting crossbar 105 can form a structurally stable truss structure.

Both ends of the first connecting crossbar 103, both ends of the second connecting crossbar 104 and both ends of the third connecting crossbar 105 are all correspondingly welded with the first support longitudinal bar 101 and the second support longitudinal bar 102 to ensure the structural strength and reliability of the mounting frame 1.

In an embodiment of the present application, the first support longitudinal bar 101 is arranged close to the front-end opening 5, and the second support longitudinal bar 102 is arranged away from the front-end opening 5. The second support longitudinal bar 102 includes a plurality of the vehicle body mounting seats 6, and the plurality of the vehicle body mounting seats 6 are arranged along a length direction of the second support longitudinal bar 102 at intervals. Each of the vehicle body mounting seats 6 includes a first mounting portion 601 and a vehicle body connecting portion 602, the first mounting portion 601 and the vehicle body connecting portion 602 are connected to each other to form an L-shaped structure; the first mounting portion 601 is fixedly connected to the second support longitudinal bar 102, and the vehicle body connecting portion 602 is detachably connected to the vehicle body front-end bearing structure through a first connector (not shown in the figures). That is, by arranging the vehicle body mounting seats 6 on the mounting frame 1, reliable assembly and fixing between the mounting frame 1 and the vehicle body front-end bearing structure is implemented.

According to actual usage requirements, the first connector may be bolts, screws or pins. The form of the first connector is not limited to the above-mentioned types.

In an embodiment of the present application, a plurality of first connecting plates 7 extending toward the top hood body 2 are fixedly arranged on the first connecting crossbar 103, and the plurality of first connecting plates 7 are arranged along a length direction of the first connecting crossbar 103 at intervals. Connecting folded edges 701 are arranged at an end of the plurality of first connecting plates 7 close to the top hood body 2. First pre-embedded bosses 21 being in one-to-one correspondence with each of the first connecting plates 7 are arranged inside the top hood body 2 and each of the first pre-embedded bosses 21 is detachably connected to each of the connecting folded edges 701 through a second connector (not shown). That is, by arranging the first connecting plates 7 on the mounting frame 1 and arranging the first pre-embedded boss 21 on the top hood body 2, the detachable assembly and fixing between the mounting frame 1 and the top hood body 2 is implemented to facilitate the replacement operation of the top hood body 2.

According to actual usage requirements, the second connector may be bolts, screws or pins. The form of the second connector is not limited to the above-mentioned types.

In an embodiment of the present application, a plurality of second connecting plates 8 extending toward the bottom hood body 4 are fixedly arranged on the third connecting crossbar 105, and the plurality of second connecting plates 8 are arranged along a length direction of the third connecting crossbar 105 at intervals. Second pre-embedded bosses 41 being in one-to-one correspondence with each of the second connecting plates 8 are arranged inside the bottom hood body 4 and each of the second pre-embedded bosses 41 is detachably connected to each of the second connecting plates 8 through a third connector (not shown). That is, by arranging the second connecting plates 8 on the mounting frame 1 and arranging the second pre-embedded boss 41 on the bottom hood body 4, the detachable assembly and fixing between the mounting frame 1 and the bottom hood body 4 is implemented to facilitate the replacement operation of the bottom hood body 4.

According to actual usage requirements, the third connector may be bolts, screws or pins. The form of the third connector is not limited to the above-mentioned types.

In an embodiment of the present application, a plurality of first connecting seats 9 are fixedly arranged on the first connecting crossbar 103, and the plurality of first connecting seats 9 are arranged along the length direction of the first connecting crossbar 103 at intervals, each of the first connecting seats 9 is a "π"-shaped structure protruding toward the direction of the lateral hood bodies 3, and each of the first connecting seats 9 is detachably connected to the lateral hood bodies 3 through a first adjusting connector. A plurality of second connecting seats 10 are fixedly arranged on the second connecting crossbar 104, and the plurality of second connecting seats 10 are arranged along a length direction of the second connecting crossbar 104 at intervals, each of the second connecting seats 10 is a "π"-shaped structure protruding toward the direction of the lateral hood bodies 3, and each of the second connecting seats 10 is detachably connected to the lateral hood bodies 3 through a second adjusting connector. That is, by arranging the first connecting seats 9 and second connecting seats 10 on the mounting frame 1, the detachable assembly and fixing between the mounting frame 1 and the lateral hood bodies 3 is implemented to facilitate the replacement operation of the lateral hood bodies 3.

In an embodiment, the first adjusting connector includes a first connecting screw (not shown in the figures) and a first floating nut 11 engaged with the first connecting screw, the first floating nut 11 is fixed inside the first connecting seat 9, the first connecting screw successively passes through the lateral hood bodies 3 and the first connecting seat 9 and is connected with the first floating nut 11. Through the assembly adjustment of the first floating nut 11 and the first connecting screw rod, errors can be adjusted during the installation process.

In an embodiment, the second adjusting connector includes a second connecting screw (not shown in the figures) and a second floating nut 12 engaged with the second connecting screw, the second floating nut 12 is fixed inside the second connecting seat 10, the second connecting screw successively passes through the lateral hood bodies 3 and the second connecting seat 10 and is connected with the second floating nut 12. Through the assembly adjustment of the second floating nut 12 and the second connecting screw rod, errors can be adjusted during the installation process.

Therefore, by arranging the first adjusting connector and the second adjusting connector, the positions of the top hood body 2, the bottom hood body 4 and each of the lateral hood bodies 3 can be effectively adjusted in the three-coordinate direction, and the final contour accuracy of the fixed hood is further improved on the basis of reducing grinding and assembling.

In an embodiment of the present application, the top hood body 2 is provided with top hood body flanges 201 corresponding to the lateral hood bodies 3, the lateral hood bodies 3 is provided with a first lateral hood body flange 301 engaged with the top hood body flange 201, and the first lateral hood body flange 301 and the top hood body flange 201 are spliced together to implement reliable assembly between the top hood body 2 and the lateral hood bodies 3.

In an embodiment of the present application, each of the top hood body flanges 201 is provided with a first limiting plate 202 for limiting a mounting position of each lateral hood body 3 and the first limiting plate 202 is arranged at a position on each top hood body flange 201 close to the front-end opening 5. That is, when the lateral hood bodies 3 are mounted on the top hood body 2, the mounting position of the lateral hood bodies 3 can be limited by the first limiting plate 202, and an assembly position between the lateral hood bodies 3 and the top hood body 2 is more quickly determined.

In an embodiment of the present application, a vehicle body connecting flange 203 is provided on a side of the top hood body 2 away from the front-end opening 5, the vehicle body connecting flange 203 includes a plurality of connecting holes 204 arranged along a length direction of the vehicle body connecting flange 203 at intervals and each of the connecting holes 204 is detachably connected to the vehicle body front-end bearing structure through a fourth connector (not shown). That is, by arranging the vehicle body connecting flange 203, it is convenient to assemble and fix the top hood body 2 and the vehicle body front-end bearing structure, and the assembly reliability between the fixed hood and the vehicle body is further improved.

According to actual usage requirements, the fourth connector may be bolts, screws or pins. The form of the fourth connector is not limited to the above-mentioned types.

In an embodiment of the present application, the bottom hood body 4 is provided with bottom hood body flanges 401 corresponding to the lateral hood bodies 3, the lateral hood bodies 3 are provided with a second lateral hood body flange 302 engaged with the bottom hood body flange 401, and the second lateral hood body flange 302 and the bottom hood body flange 401 are spliced together to implement reliable assembly between the bottom hood body 4 and the lateral hood bodies 3.

In an embodiment of the present application, each of the bottom hood body flanges 401 is provided with a second limiting plate 402 for limiting a mounting position of each lateral hood body 3, and the second limiting plate 402 is arranged at a position on each bottom hood body flange 401 close to the front-end opening 5. That is, when the lateral hood bodies 3 are mounted on the bottom hood body 4, the mounting position of the lateral hood bodies 3 can be limited by the second limiting plate 402, and the assembly position of the lateral hood bodies 3 with respect to the bottom hood body 4 is more quickly determined.

In an embodiment of the present application, a limiting bayonet 303 corresponding to the second limiting plate 402 is arranged on the second lateral hood body flange 302, and the second limiting plate 402 can be snapped into in the limiting bayonet 303 when the lateral hood bodies 3 and the bottom hood body 4 are assembled, mounting positions of the lateral hood bodies 3 can be more quickly determined and the assembly efficiency is further improved.

The installation process of the fixed hood of the embodiment of the present application at the new construction stage is as follows.

Firstly, the mounting frame 1 is connected to the vehicle body front-end bearing structure. Then the first pre-embedded bosses 21 on the top hood body 2 are connected with the first connecting plates 7 on the mounting frame 1, and then the vehicle body connecting flange 203 on the top hood body 2 is connected with the vehicle body front-end bearing structure.

Secondly, the second connecting plates 8 on the mounting frame 1 are connected through the second pre-embedded bosses 41 on the bottom hood body 4

Finally, each lateral hood body 3 is buckled and mounted on the corresponding top hood body flange 201 and bottom hood body flange 401, and then the first connecting seats 9 and the second connecting seats 10 on the mounting frame 1 are fastened to the lateral hood bodies 3 respectively.

When the fixed hood of the rail vehicle needs to be replaced due to impact or foreign matter hitting, the lateral hood bodies 3 can be taken off directly from the outside, the corresponding damaged parts are replaced, and the lateral hood bodies 3 is restored to its original state finally. The replaced parts can be installed directly after being sprayed in advance, and there is no need to disassemble other front-end parts. Therefore, by adopting the fixed hood according to the embodiment of the present application, the replacement cycle of the fixed hood can be effectively shortened and the replacement process of the fixed hood is simplified.

An embodiment of the present application further provides a front hood, including a fixed hood and an opening and closing hood, where the fixed hood is the fixed hood according to the above embodiments. Since the front hood is provided with the fixed hood according to the above-mentioned embodiment, the front hood has all the advantages of the fixed hood according to the above-mentioned embodiment, thereby improving the performance of the hood.

An embodiment of the present application further provides a rail vehicle, including the fixed hood according to the above embodiments, or the front hood according to the above embodiments. Since the rail vehicle is provided with the fixed hood according to the above embodiment or the front hood according to the above embodiment, the rail vehicle has all the advantages of the fixed hood according to the above embodiment or the front hood according to the above embodiment, thereby improving the use of the rail vehicle performance.

## Claims

1. A fixed hood for a railway vehicle, comprising:
a mounting frame (1), configured to be detachably connected to a vehicle body front-end bearing structure; and
a fixed hood main body, arranged outside the mounting frame (1) and comprising a top hood body (2), a bottom hood body (4) and two lateral hood bodies (3), wherein the top hood body (2), the bottom hood body (4) and the two lateral hood bodies (3) are detachably connected to the mounting frame (1) respectively, the two lateral hood bodies (3) are symmetrically arranged between the top hood body (2) and the bottom hood body (4), to make the top hood body (2), the bottom hood body (4) and the two lateral hood bodies (3) enclose to form a front-end opening (5);
wherein the mounting frame (1) comprises a first frame and a second frame arranged symmetrically, each of the first frame and the second frame comprising a first support longitudinal bar (101), a second support longitudinal bar (102), a first connecting crossbar (103), a second connecting crossbar (104) and a third connecting crossbar (105), the first connecting crossbar (103), the second connecting crossbar (104) and the third connecting crossbar (105) being arranged along a height direction of the mounting frame (1) at intervals, and both ends of the first connecting crossbar (103), both ends of the second connecting crossbar (104) and both ends of the third connecting crossbar (105) being connected with the first support longitudinal bar (101) and the second support longitudinal bar (102) respectively;
**characterized in that**,
the first support longitudinal bar (101) is arranged close to the front-end opening (5), and the second support longitudinal bar (102) is arranged far away from the front-end opening (5); a plurality of the vehicle body mounting seats (6) are arranged along a length direction of the second support longitudinal bar (102) at intervals, each of the plurality of the vehicle body mounting seats (6) comprising a first mounting portion (601) and a vehicle body connecting portion (602), the first mounting portion (601) and the vehicle body connecting portion (602) being connected to each other to form an L-shaped structure; the first mounting portion (601) is fixedly connected to the second support longitudinal bar (102), and the vehicle body connecting portion (602) is detachably connectable to the vehicle body front-end bearing structure through a first connector.

2. The fixed hood of claim 1, wherein a plurality of first connecting plates (7) extending toward the top hood body (2) are fixedly arranged on the first connecting crossbar (103), and the plurality of first connecting plates (7) are arranged along a length direction of the first connecting crossbar (103) at intervals; connecting folded edges (701) are arranged at an end of each of the plurality of first connecting plates (7) close to the top hood body (2); first pre-embedded bosses (21) being in one-to-one correspondence with the plurality of the first connecting plates (7) are arranged inside the top hood body (2), and each of the first pre-embedded bosses (21) is detachably connected to each of the connecting folded edges (701) through a second connector.

3. The fixed hood of claim 1, wherein a plurality of second connecting plates (8) extending toward the bottom hood body (4) are fixedly arranged on the third connecting crossbar (105), and the plurality of second connecting plates (8) are arranged along a length direction of the third connecting crossbar (105) at intervals; second pre-embedded bosses (41) being in one-to-one correspondence with the plurality of second connecting plates (8) are arranged inside the bottom hood body (4), and each of the second pre-embedded bosses (41) is detachably connected to each of the plurality of second connecting plates (8) through a third connector.

4. The fixed hood of claim 1, wherein a plurality of first connecting seats (9) are fixedly arranged on the first connecting crossbar (103), and the plurality of first connecting seats (9) are arranged along a length direction of the first connecting crossbar (103) at intervals, each of the first connecting seats (9) is a π-shaped structure protruding toward the direction of the lateral hood bodies (3), and each of the first connecting seats (9) is detachably connected to the lateral hood bodies (3) through a first adjusting connector; and
a plurality of second connecting seats (10) are fixedly arranged on the second connecting crossbar (104), and the plurality of second connecting seats (10) are arranged along a length direction of the second connecting crossbar (104) at intervals, each of the second connecting seats (10) is a π-shaped structure protruding toward the direction of the lateral hood bodies (3), and each of the second connecting seats (10) is detachably connected to the lateral hood body (3) through a second adjusting connector.

5. The fixed hood of claim 4, wherein the first adjusting connector comprises a first connecting screw and a first floating nut (11) engaged with the first connecting screw, the first floating nut (11) is fixed inside the first connecting seat (9), the first connecting screw successively passes through the lateral hood bodies (3), and the first connecting seat (9) and is connected with the first floating nut (11); and
the second adjusting connector comprises a second connecting screw and a second floating nut (12) engaged with the second connecting screw, the second floating nut (12) is fixed inside the second connecting seat (10), the second connecting screw successively passes through the lateral hood bodies (3), and the second connecting seat (10) and is connected with the second floating nut (12).

6. The fixed hood of any one of claims 1 to 5, wherein the top hood body (2) is provided with top hood body flanges (201) corresponding to the lateral hood bodies (3), the lateral hood bodies (3) are provided with a first lateral hood body flange (301) fit with the top hood body flanges (201), and the first lateral hood body flange (301) and the top hood body flange (201) are spliced together.

7. The fixed hood of claim 6, wherein each of the top hood body flanges (201) is provided with a first limiting plate (202) for limiting a mounting position of each lateral hood body (3), and the first limiting plate (202) is arranged at a position on each top hood body flange (201) close to the front-end opening (5).

8. The fixed hood of any one of claims 1 to 5, wherein a vehicle body connecting flange (203) is provided on a side of the top hood body (2) away from the front-end opening (5), the vehicle body connecting flange (203) comprises a plurality of connecting holes (204) arranged along a length direction of the vehicle body connecting flange (201) at intervals, and each of the plurality of connecting holes (204) is detachably connectable to the vehicle body front-end bearing structure through a fourth connector.

9. The fixed hood of any one of claims 1 to 5, wherein the bottom hood body (4) is provided with bottom hood body flanges (401) corresponding to the lateral hood bodies (3), and each of the lateral hood bodies (3) is provided with a second lateral hood body flange (302) engaged with the bottom hood body flanges (401), and the second lateral hood body flange (302) and the bottom hood body flange (401) are spliced together.

10. The fixed hood of claim 9, wherein each of the bottom hood body flanges (401) is provided with a second limiting plate (402) for limiting a mounting position of each lateral hood body (3), and the second limiting plate (402) is arranged at a position on each bottom hood body flange (401) close to the front-end opening (5).

11. The fixed hood of claim 10, wherein a limiting bayonet (303) corresponding to the second limiting plate (402) is arranged on the second lateral hood body flange (302), and the second limiting plate (402) is snapped into in the limiting bayonet (303).

12. A front hood for a railway vehicle, comprising a fixed hood of any one of claims 1 to 11.

13. A rail vehicle, comprising a fixed hood of any one of claims 1 to 11, or a front hood of claim 12.

## Patentansprüche

1. Feststehende Abdeckung für ein Schienenfahrzeug, umfassend:
einen Montagerahmen (1), der dazu konfiguriert ist, mit einer Lagerstruktur eines Vorderendes einer Fahrzeugkarosserie abnehmbar verbunden zu sein; und
einen Hauptkörper der feststehenden Abdeckung, der außerhalb des Montagerahmens (1) angeordnet ist und einen oberen Abdeckungskörper (2), einen unteren Abdeckungskörper (4) und zwei seitliche Abdeckungskörper (3) umfasst, wobei der obere Abdeckungskörper (2), der untere Abdeckungskörper (4) und die beiden seitlichen Abdeckungskörper (3) jeweils mit dem Montagerahmen (1) abnehmbar verbunden sind, die beiden seitlichen Abdeckungskörper (3) zwischen dem oberen Abdeckungskörper (2) und dem unteren Abdeckungskörper (4) symmetrisch angeordnet sind, um zu bewirken, dass sich der obere Abdeckungskörper (2), der untere Abdeckungskörper (4) und die beiden seitlichen Abdeckungskörper (3) schließen, um eine Vorderendöffnung (5) zu bilden;
wobei der Montagerahmen (1) einen ersten Rahmen und einen zweiten Rahmen umfasst, die symmetrisch angeordnet sind, wobei jeder von dem ersten Rahmen und dem zweiten Rahmen eine erste Trägerlängsstrebe (101), eine zweite Trägerlängsstrebe (102), eine erste Verbindungsquerstrebe (103), eine zweite Verbindungsquerstrebe (104) und eine dritte Verbindungsquerstrebe (105) umfasst, wobei die erste Verbindungsquerstrebe (103), die zweite Verbindungsquerstrebe (104) und die dritte Verbindungsquerstrebe (105) entlang einer Höhenrichtung des Montagerahmens (1) in Intervallen angeordnet sind, und die beiden Enden der ersten Verbindungsquerstrebe (103), die beiden Enden der zweiten Verbindungsquerstrebe (104) und die beiden Enden der dritten Verbindungsquerstrebe (105) jeweils mit der ersten Trägerlängsstrebe (101) und der zweiten Trägerlängsstrebe (102) verbunden sind;
**dadurch gekennzeichnet, dass**
die erste Trägerlängsstrebe (101) nahe an der Vorderendöffnung (5) angeordnet ist, und die zweite Trägerlängsstrebe (102) weit von der Vorderendöffnung (5) entfernt angeordnet ist; eine Vielzahl der Fahrzeugkarosserie-Montagesitze (6) entlang einer Längsrichtung der zweiten Trägerlängsstrebe (102) in Intervallen angeordnet ist, wobei jeder der Vielzahl der Fahrzeugkarosserie-Montagesitze (6) einen ersten Montageabschnitt (601) und einen Fahrzeugkarosserie-Verbindungsabschnitt (602) umfasst, wobei der erste Montageabschnitt (601) und der Fahrzeugkarosserie-Verbindungsabschnitt (602) miteinander verbunden sind, um eine L-förmige Struktur zu bilden; der erste Montageabschnitt (601) mit der zweiten Trägerlängsstrebe (102) fest verbunden ist, und der Fahrzeugkarosserie-Verbindungsabschnitt (602) mit der Lagerstruktur des Vorderendes der Fahrzeugkarosserie über ein erstes Verbindungsstück abnehmbar verbunden werden kann.

2. Feststehende Abdeckung nach Anspruch 1, wobei eine Vielzahl von ersten Verbindungsplatten (7), die sich in Richtung auf den oberen Abdeckungskörper (2) erstrecken, an der ersten Verbindungsquerstrebe (103) fest angeordnet sind, und die Vielzahl von ersten Verbindungsplatten (7) entlang einer Längsrichtung der ersten Verbindungsquerstrebe (103) in Intervallen angeordnet ist; Verbindungsfaltkanten (701) an einem Ende jeder der Vielzahl von ersten Verbindungsplatten (7) nahe an dem oberen Abdeckungskörper (2) angeordnet sind; wobei erste im Voraus eingebettete Auswölbungen (21), die der Vielzahl der ersten Verbindungsplatten (7) eineindeutig entsprechen, im Innern des oberen Abdeckungskörpers (2) angeordnet sind, und jede der ersten im Voraus eingebetteten Auswölbungen (21) mit jeder der Verbindungsfaltkanten (701) über ein zweites Verbindungsstück abnehmbar verbunden ist.

3. Feststehende Abdeckung nach Anspruch 1, wobei eine Vielzahl von zweiten Verbindungsplatten (8), die sich in Richtung auf den unteren Abdeckungskörper (4) erstrecken, an der dritten Verbindungsquerstrebe (105) fest angeordnet sind, und die Vielzahl von zweiten Verbindungsplatten (8) entlang einer Längsrichtung der dritten Verbindungsquerstrebe (105) in Intervallen angeordnet ist; wobei zweite im Voraus eingebettete Auswölbungen (41), die der Vielzahl von zweiten Verbindungsplatten (8) eineindeutig entsprechen, im Innern des unteren Abdeckungskörpers (4) angeordnet sind, und jede der zweiten im Voraus eingebetteten Auswölbungen (41) mit jeder der Vielzahl von zweiten Verbindungsplatten (8) über ein drittes Verbindungsstück abnehmbar verbunden ist.

4. Feststehende Abdeckung nach Anspruch 1, wobei eine Vielzahl von ersten Verbindungssitzen (9) an der ersten Verbindungsquerstrebe (103) fest angeordnet ist, und die Vielzahl von ersten Verbindungssitzen (9) entlang einer Längsrichtung der ersten Verbindungsquerstrebe (103) in Intervallen angeordnet ist, wobei jeder der ersten Verbindungssitze (9) eine π-förmige Struktur ist, die in Richtung auf den seitlichen Abdeckungskörper (3) vorsteht, und jeder der ersten Verbindungssitze (9) mit den seitlichen Abdeckungskörpern (3) über ein erstes Anpassungsverbindungsstück abnehmbar verbunden ist; und
eine Vielzahl von zweiten Verbindungssitzen (10) an der zweiten Verbindungsquerstrebe (104) fest angeordnet ist, und die Vielzahl von zweiten Verbindungssitzen (10) entlang einer Längsrichtung der zweiten Verbindungsquerstrebe (104) in Intervallen angeordnet ist, wobei jeder der zweiten Verbindungssitze (10) eine π-förmige Struktur ist, die in Richtung auf die seitlichen Abdeckungskörper (3) vorsteht, und jeder der zweiten Verbindungssitze (10) mit dem seitlichen Abdeckungskörper (3) über ein zweites Anpassungsverbindungsstück abnehmbar verbunden ist.

5. Feststehende Abdeckung nach Anspruch 4, wobei das erste Anpassungsverbindungsstück eine erste Verbindungsschraube und eine erste schwimmend gelagerte Mutter (11), die mit der ersten Verbindungsschraube in Eingriff steht, umfasst, die erste schwimmend gelagerte Mutter (11) im Innern des ersten Verbindungssitzes (9) befestigt ist, die erste Verbindungsschraube nacheinander durch die seitlichen Abdeckungskörper (3) und den ersten Verbindungssitz (9) geht und mit der ersten schwimmend gelagerten Mutter (11) verbunden ist; und
das zweite Anpassungsverbindungsstück eine zweite Verbindungsschraube und eine zweite schwimmend gelagerte Mutter (12), die mit der zweiten Verbindungsschraube in Eingriff steht, umfasst, die zweite schwimmend gelagerte Mutter (12) im Innern des zweiten Verbindungssitzes (10) befestigt ist, die zweite Verbindungsschraube nacheinander durch die seitlichen Abdeckungskörper (3) und den zweiten Verbindungssitz (10) geht und mit der zweiten schwimmend gelagerten Mutter (12) verbunden ist.

6. Feststehende Abdeckung nach einem der Ansprüche 1 bis 5, wobei der obere Abdeckungskörper (2) mit oberen Abdeckungskörperflanschen (201), die den seitlichen Abdeckungskörpern (3) entsprechen, versehen ist, die seitlichen Abdeckungskörper (3) mit einem ersten seitlichen Abdeckungskörperflansch (301) versehen sind, der mit den oberen Abdeckungskörperflanschen (201) zusammenpasst, und der erste seitliche Abdeckungskörperflansch (301) und der obere Abdeckungskörperflansch (201) zusammengespleißt sind.

7. Feststehende Abdeckung nach Anspruch 6, wobei jeder der oberen Abdeckungskörperflansche (201) mit einer ersten Begrenzungsplatte (202) zum Begrenzen einer Montageposition jedes seitlichen Abdeckungskörpers (3) versehen ist, und die erste Begrenzungsplatte (202) in einer Position an jedem oberen Abdeckungskörperflansch (201) nahe an der Vorderendöffnung (5) angeordnet ist.

8. Feststehende Abdeckung nach einem der Ansprüche 1 bis 5, wobei ein Fahrzeugkarosserie-Verbindungsflansch (203) auf einer Seite des oberen Abdeckungskörpers (2) von der Vorderendöffnung (5) entfernt bereitgestellt wird, der Fahrzeugkarosserie-Verbindungsflansch (203) eine Vielzahl von Verbindungslöchern (204) umfasst, die entlang einer Längsrichtung des Fahrzeugkarosserie-Verbindungsflansches (201) in Intervallen angeordnet sind, und jedes der Vielzahl von Verbindungslöchern (204) mit der Lagerstruktur des Vorderendes der Fahrzeugkarosserie über ein viertes Verbindungsstück abnehmbar verbunden werden kann.

9. Feststehende Abdeckung nach einem der Ansprüche 1 bis 5, wobei der untere Abdeckungskörper (4) mit unteren Abdeckungskörperflanschen (401), die den seitlichen Abdeckungskörpern (3) entsprechen, versehen ist, und jeder der seitlichen Abdeckungskörper (3) mit einem zweiten seitlichen Abdeckungskörperflansch (302) versehen ist, der mit den unteren Abdeckungskörperflanschen (401) in Eingriff steht, und der zweite seitliche Abdeckungskörperflansch (302) und der untere Abdeckungskörperflansch (401) zusammengespleißt sind.

10. Feststehende Abdeckung nach Anspruch 9, wobei jeder der unteren Abdeckungskörperflansche (401) mit einer zweiten Begrenzungsplatte (402) zum Begrenzen einer Montageposition jedes seitlichen Abdeckungskörpers (3) versehen ist, und die zweite Begrenzungsplatte (402) in einer Position an jedem unteren Abdeckungskörperflansch (401) nahe an der Vorderendöffnung (5) angeordnet ist.

11. Feststehende Abdeckung nach Anspruch 10, wobei ein Begrenzungsbajonett (303), das der zweiten Begrenzungsplatte (402) entspricht, an dem zweiten seitlichen Abdeckungskörperflansch (302) angeordnet ist, und die zweite Begrenzungsplatte (402) in das Begrenzungsbajonett (303) eingerastet ist.

12. Vorderabdeckung für ein Schienenfahrzeug, umfassend eine feststehende Abdeckung nach einem der Ansprüche 1 bis 11.

13. Schienenfahrzeug, umfassend eine feststehende Abdeckung nach einem der Ansprüche 1 bis 11 oder eine Vorderabdeckung nach Anspruch 12.

## Revendications

1. Capot fixe pour un véhicule ferroviaire, comprenant :
un cadre de montage (1), configuré pour être connecté de manière amovible à une structure porteuse d'extrémité avant de carrosserie de véhicule ; et
un corps principal de capot fixe, agencé à l'extérieur du cadre de montage (1) et comprenant un corps de capot supérieur (2), un corps de capot inférieur (4) et deux corps de capot latéraux (3), dans lequel le corps de capot supérieur (2), le corps de capot inférieur (4) et les deux corps de capot latéraux (3) sont reliés respectivement de manière amovible au cadre de montage (1), les deux corps de capot latéraux (3) sont agencés de manière symétrique entre le corps de capot supérieur (2) et le corps de capot inférieur (4), pour fermer le corps de capot supérieur (2), le corps de capot inférieur (4) et les deux corps de capot latéraux (3) afin de former une ouverture d'extrémité avant (5) ;
dans lequel le cadre de montage (1) comprend un premier cadre et un deuxième cadre agencés de manière symétrique, chacun du premier cadre et du deuxième cadre comprenant une première barre longitudinale de support (101), une deuxième barre longitudinale de support (102), une première barre transversale de connexion (103), une deuxième barre transversale de connexion (104) et une troisième barre transversale de connexion (105), la première barre transversale de connexion (103), la deuxième barre transversale de connexion (104) et la troisième barre transversale de connexion (105) étant agencées le long d'une direction de hauteur du cadre de montage (1) à des intervalles, et les deux extrémités de la première barre transversale de connexion (103), les deux extrémités de la deuxième barre transversale de connexion (104) et les deux extrémités de la troisième barre transversale de connexion (105) étant connectées à la première barre longitudinale de support (101) et à la deuxième barre longitudinale de support (102) respectivement ;
**caractérisé en ce que**
la première barre longitudinale de support (101) est agencée à proximité de l'ouverture d'extrémité avant (5), et la deuxième barre longitudinale de support (102) est agencée loin de l'ouverture d'extrémité avant (5) ; une pluralité de sièges de montage de carrosserie de véhicule (6) sont agencés le long d'une direction de longueur de la deuxième barre longitudinale de support (102) à des intervalles, chacun de la pluralité des sièges de montage de carrosserie de véhicule (6) comprenant une première partie de montage (601) et une partie de connexion de carrosserie de véhicule (602), la première partie de montage (601) et la partie de connexion de carrosserie de véhicule (602) étant connectées l'une à l'autre pour former une structure en forme de L ; la première partie de montage (601) est connectée de manière fixe à la deuxième barre longitudinale de support (102), et la partie de connexion de carrosserie de véhicule (602) peut être connectée de manière amovible à la structure porteuse d'extrémité avant de carrosserie de véhicule par l'intermédiaire d'un premier connecteur.

2. Capot fixe selon la revendication 1, dans lequel une pluralité de premières plaques de connexion (7) s'étendant vers le corps de capot supérieur (2) sont agencées de manière fixe sur la première barre transversale de connexion (103), et la pluralité de premières plaques de connexion (7) sont agencées le long d'une direction longitudinale de la première barre transversale de connexion (103) à des intervalles ; des bords pliés de connexion (701) sont agencés à une extrémité de chacune de la pluralité de premières plaques de connexion (7) à proximité du corps de capot supérieur (2) ; des premiers bossages pré-encastrés (21) étant en correspondance biunivoque avec la pluralité des premières plaques de connexion (7) sont agencés à l'intérieur du corps de capot supérieur (2), et chacun des premiers bossages pré-encastrés (21) est connecté de manière amovible à chacun des bords pliés de connexion (701) par l'intermédiaire d'un deuxième connecteur.

3. Capot fixe selon la revendication 1, dans lequel une pluralité de deuxièmes plaques de connexion (8) s'étendant vers le corps de capot inférieur (4) sont agencées de manière fixe sur la troisième barre transversale de connexion (105), et la pluralité de deuxièmes plaques de connexion (8) sont agencées le long d'une direction de longueur de la troisième barre transversale de connexion (105) à des intervalles ; des deuxièmes bossages pré-encastrés (41) étant en correspondance biunivoque avec la pluralité de deuxièmes plaques de connexion (8) sont agencés à l'intérieur du corps de capot inférieur (4), et chacun des deuxièmes bossages pré-encastrés (41) est connecté de manière amovible à chacune de la pluralité de deuxièmes plaques de connexion (8) par l'intermédiaire d'un troisième connecteur.

4. Capot fixe selon la revendication 1, dans lequel une pluralité de premiers sièges de connexion (9) sont agencés de manière fixe sur la première barre transversale de connexion (103), et la pluralité de premiers sièges de connexion (9) sont agencés le long d'une direction de longueur de la première barre transversale de connexion (103) à des intervalles, chacun des premiers sièges de connexion (9) est une structure en forme de π faisant saillie vers la direction des corps de capot latéraux (3), et chacun des premiers sièges de connexion (9) est connecté de manière amovible aux corps de capot latéraux (3) par l'intermédiaire d'un premier connecteur d'ajustement ; et
une pluralité de deuxièmes sièges de connexion (10) sont agencés de manière fixe sur la deuxième barre transversale de connexion (104), et la pluralité de deuxièmes sièges de connexion (10) sont agencés le long d'une direction de longueur de la deuxième barre transversale de connexion (104) à des intervalles, chacun des deuxièmes sièges de connexion (10) est une structure en forme de π faisant saillie vers la direction des corps de capot latéraux (3), et chacun des deuxièmes sièges de connexion (10) est connecté de manière amovible au corps de capot latéral (3) par l'intermédiaire d'un deuxième connecteur d'ajustement.

5. Capot fixe selon la revendication 4, dans lequel le premier connecteur d'ajustement comprend une première vis de connexion et un premier écrou flottant (11) en prise avec la première vis de connexion, le premier écrou flottant (11) est fixé à l'intérieur du premier siège de connexion (9), la première vis de connexion passe successivement à travers les corps de capot latéraux (3) et le premier siège de connexion (9) et est connectée au premier écrou flottant (11) ; et
le deuxième connecteur d'ajustement comprend une deuxième vis de connexion et un deuxième écrou flottant (12) en prise avec la deuxième vis de connexion, le deuxième écrou flottant (12) est fixé à l'intérieur du deuxième siège de connexion (10), la deuxième vis de connexion passe successivement à travers les corps de capot latéraux (3) et le deuxième siège de connexion (10) et est connectée au deuxième écrou flottant (12).

6. Capot fixe selon l'une quelconque des revendications 1 à 5, dans lequel le corps de capot supérieur (2) est pourvu de brides de corps de capot supérieur (201) correspondant aux corps de capot latéraux (3), les corps de capot latéraux (3) sont pourvus d'une première bride de corps de capot latéral (301) adaptée aux brides de corps de capot supérieur (201), et la première bride de corps de capot latéral (301) et la bride de corps de capot supérieur (201) sont épissées ensemble.

7. Capot fixe selon la revendication 6, dans lequel chacune des brides de corps de capot supérieur (201) est pourvue d'une première plaque de limitation (202) pour limiter une position de montage de chaque corps de capot latéral (3), et la première plaque de limitation (202) est agencée au niveau d'une position sur chaque bride de corps de capot supérieur (201) à proximité de l'ouverture d'extrémité avant (5).

8. Capot fixe selon l'une quelconque des revendications 1 à 5, dans lequel une bride de connexion de carrosserie de véhicule (203) est prévue sur un côté du corps de capot supérieur (2) à l'écart de l'ouverture d'extrémité avant (5), la bride de connexion de carrosserie de véhicule (203) comprend une pluralité de trous de connexion (204) agencés le long d'une direction de longueur de la bride de connexion de carrosserie de véhicule (201) à des intervalles, et chacun de la pluralité de trous de connexion (204) peut être connecté de manière amovible à la structure porteuse d'extrémité avant de carrosserie de véhicule par l'intermédiaire d'un quatrième connecteur.

9. Capot fixe selon l'une quelconque des revendications 1 à 5, dans lequel le corps de capot inférieur (4) est pourvu de brides de corps de capot inférieur (401) correspondant aux corps de capot latéraux (3), et chacun des corps de capot latéraux (3) est pourvu d'une deuxième bride de corps de capot latéral (302) en prise avec les brides de corps de capot inférieur (401), et la deuxième bride de corps de capot latéral (302) et la bride de corps de capot inférieur (401) sont épissées ensemble.

10. Capot fixe selon la revendication 9, dans lequel chacune des brides de corps de capot inférieur (401) est pourvue d'une deuxième plaque de limitation (402) pour limiter une position de montage de chaque corps de capot latéral (3), et la deuxième plaque de limitation (402) est agencée au niveau d'une position sur chaque bride de corps de capot inférieur (401) à proximité de l'ouverture d'extrémité avant (5).

11. Capot fixe selon la revendication 10, dans lequel une baïonnette de limitation (303) correspondant à la deuxième plaque de limitation (402) est agencée sur la deuxième bride de corps de capot latéral (302), et la deuxième plaque de limitation (402) est encliquetée dans la baïonnette de limitation (303).

12. Capot avant pour véhicule ferroviaire, comprenant un capot fixe selon l'une quelconque des revendications 1 à 11.

13. Véhicule ferroviaire, comprenant un capot fixe selon l'une quelconque des revendications 1 à 11, ou un capot avant selon la revendication 12.
